# EUROPÄISCHE PATENTSCHRIFT

(11) **EP 3 679 273 B1**
(45) Veröffentlichungstag und Bekanntmachung des Hinweises auf die Patenterteilung: **18.01.2023**
(21) Anmeldenummer: 17783394.4
(22) Anmeldetag: 05.09.2017
(51) Int. Cl.: F16H 3/66, F16H 63/30, F16H 63/50, F16H 3/56

(54) **ACHSANTRIEBSEINHEIT MIT EINEM LASTSCHALTBAREN 2-GANG GETRIEBE**
AXLE DRIVE UNIT WITH A POWER-SHIFTABLE 2-WAY TRANSMISSION
UNITÉ D'ENTRAÎNEMENT D'ESSIEU COMPRENANT UNE BOÎTE DE VITESSES À DEUX RAPPORTS COUPLABLE SOUS CHARGE

(43) Veröffentlichungstag der Anmeldung: 15.07.2020
(73) Patentinhaber: GKN AUTOMOTIVE LTD., Birmingham Business Park Birmingham West Midlands B37 7YE (GB)
(72) Erfinder: GASSMANN, Theodor, 53721 Siegburg (DE); GÜTH, Dirk, 53757 St. Augustin (DE); HAUPT, Jan, 51515 Kürten (DE)
(74) Vertreter: btb IP Bungartz Baltzer Partnerschaft mbB Patentanwälte
(86) Internationale Anmeldenummer: PCT/EP2017/072272
(87) Internationale Veröffentlichungsnummer: WO 2019/048031

(56) Entgegenhaltungen:
- DE-A1- 4 311 921
- DE-A1-102012 216 132
- DE-A1-102015 116 537
- US-A1- 2003 089 569

## Beschreibung

Die Erfindung betrifft eine Zweigang-Getriebeeinheit nach dem Oberbegriff des Anspruchs 1 sowie ein Verfahren zur Steuerung eines Schaltvorgangs bei einer derartigen Zweigang-Getriebeeinheit nach dem Oberbegriff des Anspruchs 12. Die Erfindung betrifft weiter eine Achsantriebseinheit mit einer derartigen Zweigang-Getriebeeinheit.

Einen Achsantrieb mit einer derartigen Zweigang-Getriebeeinheit offenbart auch die Druckschrift DE 10 2015 104 203 A1. Bei der als Planetengetriebe ausgebildeten Zweigang-Getriebeeinheit wird zur Realisierung des ersten Gangs ein Sonnenrad über eine Bremse oder einen Freilauf blockiert. Zur Realisierung eines zweiten Gangs werden Baugruppeneinheiten des Getriebes mittels einer Kupplung verblockt, so dass diese unter Realisierung eines Direktantriebs und infolge einer durch den Drehrichtungswechsel des Sonnenrads erfolgenden Freigabe des Sonnenrads durch den Freilauf im zweiten Gang als Block umlaufen. Weiter offenbart diese Druckschrift, die Möglichkeit, eine zusätzliche Klauenkupplung zur Festlegung des Sonnenrads im ersten Gang vorzusehen, um auch im ersten Gang den Rekuperationsbetrieb zu ermöglichen. Weiter ist offenbart, dass die Lastschaltbarkeit unter Zuhilfenahme von Aktuatoren erfolgt. Hinweise darauf, wie der eigentliche Schaltvorgang vonstattengeht, enthält die Druckschrift nicht. Die Druckschriften US 2003/0089569 A1 und DE 10 2012 216 132 A1 beschreiben ebenfalls Zweigang-Getriebeeinheiten.

Vor diesem Hintergrund ist es Aufgabe der Erfindung, eine Getriebeeinheit der eingangs genannten Art zu schaffen, die derart ausgebildet ist, dass sie eine besonders einfache und vorteilhafte Steuerung eines Gangwechsels ermöglicht.

Das hierzu zu verwendende Schaltsystem soll möglichst mit einer geringen Anzahl von Bauteilen auskommen und möglichst wenig Steuerlogik und Steuersensorik erfordern.

Zur Lösung dieser Aufgabe ist vorgesehen, dass das Schaltsystem eine Kupplungsschaltschwelle vorsieht, bei der die Reibkupplung beginnt, aus der Öffnungsstellung in die Schließstellung überzugehen oder der Übergang aus der Schließstellung in die Öffnungsstellung vollzogen ist, und das Schaltsystem eine Blockierschaltschwelle vorsieht, bei der die Blockiereinrichtung bei einem Gangwechsel aus der Blockierstellung in die Freigabestellung oder aus der Freigabestellung in die Blockierstellung übergeht, wobei die Blockierschaltschwelle derart auf die Kupplungsschaltschwelle abgestimmt ist, dass bei einem Schaltvorgang
- die Blockiereinrichtung in die Freigabestellung übergegangen ist, bevor das mit der Sperreinrichtung zusammenwirkende Getriebeglied beginnt, in die Freilaufrichtung zu drehen,
   und/oder
- die Blockiereinrichtung nicht in die Blockierstellung übergeht, bevor das mit der Sperreinrichtung zusammenwirkende Getriebeglied beginnt, in Sperrrichtung zu drängen.

Hierbei sind sowohl die Blockierbetätigung als auch die Kupplungsbetätigung mechanisch-passive Betätigungssysteme, die betriebszustandsunabhängig mit derselben Stellgröße in gleicher Höhe angesteuert sind, wobei die Blockierbetätigung ein jeweiliges

Vorspannelement aufweist, das derart dimensioniert ist, dass es bei ansteigender Stellgröße die gewünschte Blockierschaltschwelle mechanisch-passiv abbildet, und wobei die Kupplungsbetätigung ein jeweiliges

Vorspannelement aufweist, das derart dimensioniert ist, dass es bei ansteigender Stellgröße die gewünschte Kupplungsschaltschwelle mechanisch-passiv abbildet

Hinsichtlich des Verfahrens zum Betreiben einer derartigen Zweigang-Getriebeeinheit oder einer mit einer derartigen Getriebeeinheit ausgestatteten Achsantriebseinheit ist vorgesehen, dass sowohl die Blockierbetätigung als auch die Kupplungsbetätigung betriebszustandsunabhängig mit derselben Stellgröße in gleicher Höhe angesteuert werden.

Zur deutlicheren Beabstandung der Schaltschwellen kann vorgesehen sein, dass die Blockierschaltschwelle und eine Kupplungsschaltschwelle derart aufeinander abgestimmt sind, dass die Blockiereinrichtung in die Freigabestellung übergeht, bevor die Kupplung beim Übergang in die Schließstellung beginnt, Drehmoment zu übertragen, also der Kiss-Point der Kupplung erreicht ist. Ebenfalls alternativ oder zusätzlich kann vorgesehen sein, dass die die Blockierschaltschwelle und eine Kupplungsschaltschwelle derart aufeinander abgestimmt sind, dass die Blockiereinrichtung nicht in die Blockierstellung übergeht, bevor die Kupplung die Öffnungsstellung erreicht hat.

Um die Schaltsicherheit des Schaltsystems weiter zu erhöhen, kann vorgesehen sein, dass die Blockierschaltschwelle, bei der die Blockiereinrichtung schaltet, und die Kupplungsschaltschwelle, bei der die Schaltkupplung schaltet, derart aufeinander abgestimmt sind, dass der Übergang der Blockiereinrichtung in die Freigabestellung vollzogen ist, bevor die Kupplung beginnt, von Öffnungsstellung in die Schließstellung überzugehen.

Das Schaltsystem ist bevorzugt derart ausgebildet, dass es im ersten Gang ausfallsicher ("fail-safe") ist. Dies bedeutet, dass die Getriebeeinheit sich bei drucklosem System im ersten Gang befindet und so auch im ersten Gang mit in Blockierstellung befindlicher Blockiereinrichtung betrieben werden kann, wenn die Stellgrößenversorgung ausfällt. Hierzu weist das System eine "normally-blocked" Blockiereinrichtung (eine im drucklosen Schaltsystem in Blockierstellung befindliche Blockiereinrichtung) und einer "normally-open" Reibkupplung (eine im drucklosen Schaltsystem in Öffnungsstellung befindliche Reibkupplung) auf.

Das Schaltsystem kann aber selbstverständlich auch ausfallsicher ("fail-safe") für den zweiten Gang ausgelegt sein, also über eine "normally-free" Blockiereinrichtung (eine im drucklosen Schaltsystem in Freigabestellung befindliche Blockiereinrichtung) und eine "normally-closed" Reibkupplung (eine im drucklosen Schaltsystem in Schließstellung befindliche Reibkupplung) verfügen.

Die Kupplungsschaltschwelle wird dabei von der Höhe der auf die Kupplungsbetätigung wirkenden Stellgröße, bevorzugt hydraulischer Druck, angegeben, ab der die Kupplung ausgehend von der Öffnungsstellung zu schließen beginnt bzw. ab der die Kupplung ausgehend von der Schließstellung vollständig geöffnet ist. Ein hierzu geeigneter Wert liegt, wenn die Stellgröße hydraulischer Druck ist, bei ca. 2 bar bis 3 bar, bevorzugt zwischen 2,3 bar und 2,7 bar.

Die Blockierschaltschwelle, die von der Höhe der auf die Blockiereinrichtung wirkenden Stellgröße angegeben wird und ebenfalls bevorzugt hydraulischer Druck ist, ist die Schaltschwelle, bei der die Blockiereinrichtung beginnt, aus der Blockierstellung in die Freigabestellung oder aus der Freigabestellung in die Blockierstellung überzugehen. Die Blockierschaltschwelle liegt, wenn die Stellgröße hydraulischer Druck ist und insbesondere wenn das Schaltsystem ausgebildet ist, im ersten Gang ausfallsicher zu sein, unterhalb der Kupplungsschaltschwelle, bevorzugt bei etwa 1,5 bar oder etwa 0,5 bar bis 1 bar unterhalb der Kupplungsschaltschwelle. Bei einem Schaltsystem, dass im zweiten Gang ausfallsicher ausgelegt ist, liegt die Blockierschaltschwelle bevorzugt 0,5 bar bis 1 bar oberhalb der Kupplungsschaltschwelle.

Die Schaltschwellendifferenz zwischen der Blockierschaltschwelle und der Kupplungsschaltschwelle ist als Schaltsicherheit vorgesehen und bewirkt, dass bei ansteigender Stellgröße die Blockiereinrichtung die Freigabestellung systemimmanent sicher erreicht hat, bevor die Kupplungsschaltschwelle erreicht ist, und/oder die Blockierstellung systemimmanent erst dann einnimmt, wenn die Kupplungsschaltschwelle bereits überschritten ist. Bei einem Gangwechsel in anderer Richtung ist gewährleistet, dass die Kupplung vollständig geöffnet ist, bevor die Blockiereinrichtung beginnt, die Freigabestellung zu verlassen.

Aus der vorstehenden Beschreibung ergibt sich, dass die jeweiligen Schaltschwellen auch innerhalb ein und desselben Schaltsystems und innerhalb einer Baureihe aufgrund von Schwankungen bei den Eigenschaften, im Reibungsverhalten oder infolge von Toleranzschwankungen bei individuellen Bauteilen einer gewissen Varianz unterliegen können und außerdem infolge von Hysteresen unterschiedlich sein können, je nachdem ob die Schaltschwelle bei einer Stellgrößenerhöhung oder Stellgrößenerniedrigung durchschritten wird. Es ist daher möglich, dass einer Schaltschwelle kein ganz konkreter, eindeutiger Stellgrößenwert (hydraulischer Druck) sondern nur ein über einen geringen Varianzbereich erstreckender Wert zugeordnet werden kann.

Die vorstehend beschriebene Ausgestaltung des Schaltsystems ermöglicht, sowohl die Blockierbetätigung als auch die Kupplungsbetätigung betriebszustandsunabhängig stets mit derselben Stellgröße in gleicher Höhe anzusteuern. Hiermit ist gemeint, dass nur eine Stellgrößeneinheit, etwa eine hydraulischen Druck liefernde bevorzugt elektronisch über den Pumpenstrom oder die Drehzahl moment- und/oder drehzahlgeregelte Hydraulikpumpe oder nur ein hydraulisches Steuerventil, der Kupplungsbetätigung und der Blockierbetätigung vorgelagert sein müssen. Dieselbe identische Stellgröße, insbesondere derselbe identische und von einer einzigen Hydraulikpumpe oder über ein einziges hydraulisches Steuerventil eingeregelte gemeinsame hydraulische Leitungsdruck, kann in stets gleicher Höhe sowohl auf die Kupplungsbetätigung als auch auf die Blockierbetätigung wirken. Blockierbetätigung und Kupplungsbetätigung können über dieselbe Hydraulikleitung angesteuert werden.

Dies wiederrum ermöglicht die Ausbildung sowohl der Kupplungsbetätigung als auch der Blockierbetätigung als mechanisch-passive Betätigungssysteme. Als "mechanisch-passiv" wird eine Betätigung verstanden, die rein aufgrund Ihrer mechanischen Eigenschaften die erwünschte Schaltabfolge gewährleistet, ohne dass externe (elektronische) Steuereingriffe oder eine Sensorik erforderlich sind. Hierzu weisen die Blockierbetätigung und die Kupplungsbetätigung - beide umfassen bevorzugt über hydraulischen Druck betätigte Aktuatoren - Vorspannelemente auf, die die gewünschte Schaltabfolge bzw. Schaltsequenz sicherstellen. Das Vorspannelement der Blockierbetätigung ist demnach derart dimensioniert, dass es bei ansteigender Stellgröße die gewünschte Blockierschaltschwelle mechanisch-passiv abbildet, und das Vorspannelement der Kupplungsbetätigung ist demnach derart dimensioniert, dass es bei ansteigender Stellgröße die gewünschte Kupplungsschaltschwelle mechanisch-passiv abbildet. Gleichzeitig dienen die Vorspannelemente als Rückstellelemente, die bei abnehmender Stellgröße und unterschreiten der jeweiligen Schaltschwelle die Blockiereinrichtung zurück in die ausfallsichere Stellung bzw. in die "fail-safe" Stellung drängen, also die Stellung, die das Schaltsystem im drucklosen Zustand bestimmungsgemäß einnimmt.

Bei einem im zweiten Gang ausfallsicheren Schaltsystem drängen die Rückstellelemente die Blockiereinrichtung bei abnehmender Stellgröße (bei abnehmenden Schaltsystemdruck) in die Freigabestellung und die Reibkupplung in die Schließstellung. Bei einem im ersten Gang ausfallsicheren Schaltsystem drängen die Rückstellelemente die Blockiereinrichtung bei abnehmender Stellgröße (bei abnehmenden Schaltsystemdruck) in die Blockierstellung und die Reibkupplung in die Öffnungsstellung.

Die Blockiereinrichtung ist bevorzugt eine formschlüssig wirksame Blockiereinrichtung, über die das mit der Blockiereinrichtung zusammenwirkende Getriebeglied unter Bildung eines momentabstützenden Formschlusses gegen ein drehstarres Bauteil der Getriebeeinheit bzw. der Achsantriebseinheit abgestützt wird, insbesondere gegen ein Getriebe- oder Achsantriebsgehäuse oder ein hieran drehfest fixiertes Bauteil. Die Blockiereinrichtung kann in die Sperreinrichtung integriert sein und Blockiereinrichtung und Sperreinrichtung können ein gemeinsames Gehäuse aufweisen, das in einer vorteilhaften Ausgestaltung außenseitig am Gehäuse der Getriebeeinheit bzw. der Achsantriebseinheit befestigt sein kann. Die Sperreinrichtung kann insbesondere als selbststätig schaltender, mechanisch-passiver Freilauf ausgebildet sein.

Die Blockiereinrichtung gewährleistet dadurch, dass sie die Sperreinrichtung bzw. den Freilauf im ersten Gang in beide Drehrichtungen blockiert, dass im ersten Gang in Betriebszuständen, die gegenüber der normalen Geradeausfahrt mit einer Momentumkehr im Getriebe einhergehen (Rekuperationsbetrieb oder Rückwärtsfahrt), das Moment wirksam abgestützt wird. So ist gewährleistet, dass das Fahrzeug auch im ersten Gang rekuperieren und rückwärtsfahren kann.

Es sei angemerkt, dass ein Zusammenwirken eines oder mehrerer Getriebeglieder mit der Blockiereinrichtung bzw. das drehfeste Halten oder Verblocken eines oder mehrerer Getriebeglieder mittels der Reibkupplung lediglich ein Zusammenwirken bzw. drehfestes Halten oder Verblocken in funktionaler Hinsicht bedeutet und nicht notwendigerweise heißt, dass die Blockiereinrichtung und das hiermit zusammenwirkende Getriebeglied unmittelbar in Eingriff miteinander stehen bzw. dass die Reibkupplung und die hiervon gehaltenen oder verblockten Getriebeglieder unmittelbar in Kontakt stehen. Das funktionale Zusammenwirken kann auch mittelbar über zwischengeschaltete Zwischenelemente erfolgen.

Das Getriebeglied, das mit der Blockiereinrichtung funktional zusammenwirkt, und/oder das mit der Sperreinrichtung funktional zusammenwirkende Getriebeglied ist jeweils bevorzugt ein Sonnenrad einer Sonneneinheit, insbesondere ein Stützsonnenrad einer Doppel-Sonneneinheit, die eine Stützsonnenradeinheit mit Stützsonnenrad und eine Abtriebssonneneinheit mit Abtriebssonnenrad aufweist. Die Getriebeglieder, die von der Reibkupplung verblockt werden, sind bevorzugt eine Außenradeinheit und ein zu einer Doppel-Sonneneinheit gehörendes Antriebssonnenrad oder ein zu einer Doppel-Sonneneinheit gehörendes Stützsonnenrad. Selbstverständlich kann von dieser funktionalen Anordnung von Reibkupplung und Blockiereinrichtung abgewichen werden, wenn sich dies in einem bestimmten Anwendungsfall, etwa zur Realisierung anderer Übersetzungsverhältnisse oder anderer Lastpfade oder bei Verwendung eines klassischen Planetengetriebes mit innenverzahntem Hohlrad, anbietet. So kann insbesondere die Reibkupplung auch derart angeordnet sein, dass sie die Planeteneinheit und Außenradeinheit oder Sonnendeinheit und Planeteneinheit verblockt.

Die Planeteneinheit kann insbesondere als eine mit einer Mehrzahl von Planetenradpaaren mit unterschiedlichen effektiven Durchmessern versehene Doppel-Planeteneinheit ausgebildet sein. Die Planetenräder sind auf umlaufenden Stegwellen gelagert, die mit einer Antriebsradeinheit, die mit der vom E-Motor angetriebenen Welle (der Getriebeantriebswelle) kämmt, fest verbunden sind oder zumindest in Relation zu dieser ortsfest drehbar gelagert sind. Diese Antriebsradeinheit, die bevorzugt als der Außenradeinheit ausgebildet ist, bildet so zusammen mit den Stegwelle das vom E-Motor angetriebene Eingangsglied des Getriebes. Die Antriebsradeinheit kann in der bevorzugten Ausgestaltung als Außenradeinheit zwar die Planetenräder wenigstens teilweise radial innenseitig aufnehmen, ist aber - anders als ein innenverzahntes Hohlrad eines klassischen Planetengetriebes, das mit seiner Innenverzahnung mit den Planetenrädern kämmt - bevorzugt als ein nicht-innenverzahntes sondern lediglich außenverzahntes Antriebsrad ausgebildet, das außenseitig mit der vom E-Motor angetriebenen Welle (der Getriebeantriebswelle) kämmt.

Die Zweigang-Getriebeeinheit mit einem lastschaltbaren Zweiganggetriebe zur Übertragung elektromotorischer Vortriebsleistung innerhalb eines elektromotorisch oder hybridisch angetriebenen Kraftfahrzeug-Antriebsstrangs eines Personenkraftwagens ist als Teil einer Achsantriebseinheit vorgesehen, die dazu dient, elektromotorische Antriebsleistung auf zwei Räder einer elektromotorisch oder hybridisch angetriebenen Achse eines Kraftfahrzeugs zu verteilen. Die Zweiggang-Getriebeeinheit bzw. Achsantriebseinheit weist hierzu bevorzugt eine Differentialeinheit zum Ausgleich von Differenzdrehzahlen eines rechten und eines linken Antriebsrades der durch die Achsantriebseinheit angetriebenen Achse auf. Eine derartige Zweigang-Getriebeeinheit hat zwei Übersetzungsstufen, von denen eine bevorzugt als Direktantrieb (i=1, bevorzugt der zweite Gang) und eine Übersetzungsstufe mit einem sich vom Direktantrieb unterscheidenden Übersetzungsverhältnis realisiert ist (i≠1, bevorzugt i>1 und weiter bevorzugt 1,7 < i < 2, jeweils bevorzugt im ersten Gang). Die Zweigang-Getriebeeinheit weist daher weiter bevorzugt die drei Getriebe-Baugruppeneinheiten Antriebsradeinheit (bevorzugt ausgebildet als Außenradeinheit), Planeteneinheit bzw. Doppel-Planeteneinheit und Sonneneinheit bzw. Doppel-Sonneneinheit auf, die jeweils ein oder mehrere Getriebeglieder aufweisen können. Vorteilhaft kann die Achsantriebseinheit ein Achsantriebsgehäuse aufweisen, in dem sowohl die Zweigang-Getriebeeinheit als auch die Differentialeinheit sowie bevorzugt auch eine elektrische Antriebsmaschine (E-Motor) gemeinsam integriert sind. Dabei kann die elektrische Antriebsmaschine koaxial zu der Rotationsachse der die Antriebsräder antreibenden Halbwellen angeordnet sein.

Die im vorstehenden Absatz umrissene Achsantriebseinheit und ein für eine derartige Achsantriebseinheit geeignetes Zweigang-Getriebe ist in den Unterlagen der internationalen Patentanmeldung PCT/EP2016/079169 offenbart.

In den Zeichnungen zeigt
- Figur 1: eine Achsantriebseinheit mit einer in ein gemeinsames Achsantriebsgehäuse integrierten Zweigang-Getriebeeinheit und einer differentiallosen, kupplungsgesteuerten Differentialeinheit,
- Figur 2: eine schematische Ansicht der in Figur 1 dargestellten Achsantriebseinheit,
- Figur 3: ein Diagramm einer Schaltabfolge bei einem Gangwechsel (Hochschalten vom ersten in den zweiten Gang unter Last), und
- Figur 4: ein Diagramm einer Schaltabfolge bei einem Gangwechsel (Herunterschalten vom zweiten in den ersten Gang).

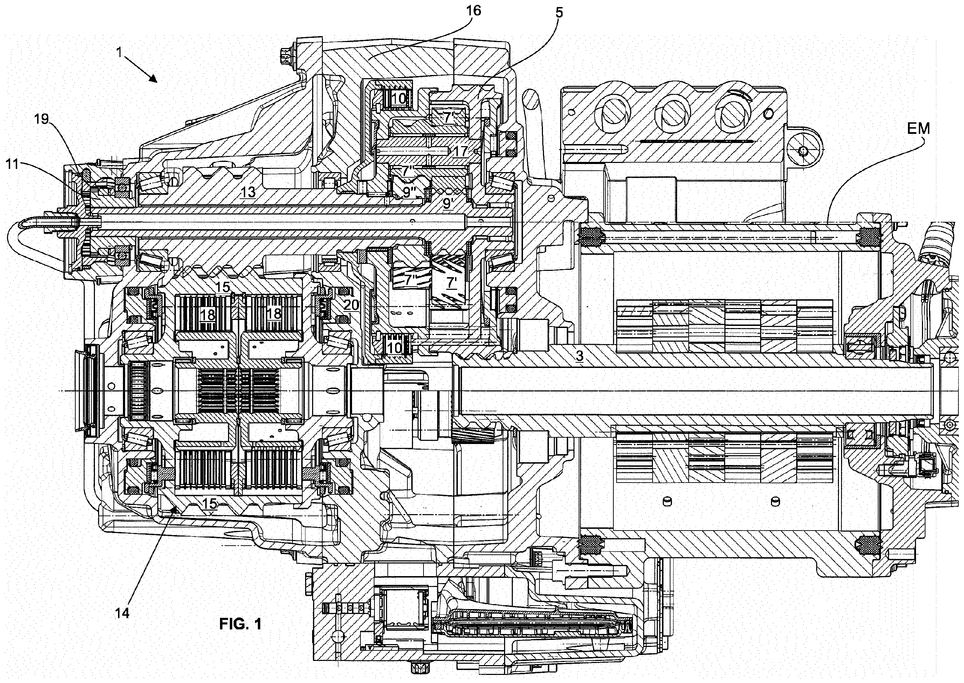

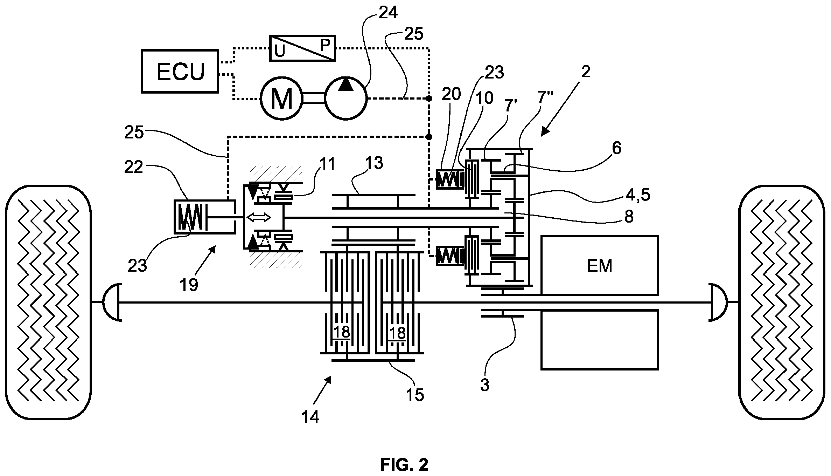

Figur 1 und Figur 2 zeigen jeweils eine Achsantriebseinheit 1 mit einem integrierten Zweiganggetriebe 2. Die Achsantriebseinheit ist für den Einsatz in einem elektromotorischen und/oder verbrennungsmotorischen (Hybrid-)Antriebstrang eines Kraftfahrzeugs konzipiert.

Eine von einem Elektromotor EM angetriebene Getriebeantriebswelle 3 steht mit einer Außenradeinheit 4 eines Zweiganggetriebes 2 über eine Außenverzahnung unmittelbar in Eingriff, um die elektromotorische Antriebsleistung über die Außenradeinheit 4 in das Zweiganggetriebe 2 einzuleiten. Die Außenradeinheit 4 weist hierzu ein Außenrad 5 auf, auf dessen nach außen weisender Mantelfläche die mit der angetriebenen Getriebeantriebswelle 3 in Eingriff stehende Außenradverzahnung unmittelbar ausgebildet ist.

Die Außenradeinheit 4 ist in dem in Figur 1 gezeigten Ausführungsbeispielen drehfest mit der Planeteneinheit 6 verbunden, so dass ein Verdrehen von Planeteneinheit 6 und Außenradeinheit 4 zueinander unabhängig von der Schaltstellung der Kupplung 10 ausgeschlossen ist. Außenradeinheit 4 und Planeteneinheit 6 bilden somit zusammen eine Funktionseinheit, die als Eingangsglied des Zweiganggetriebes fungiert.

Die Planeteneinheit 6 ist als Doppel-Planeteneinheit ausgebildet und weist eine Mehrzahl von Planetenradpaaren auf, die jeweils ein erstes Planetenrad 7' und ein zweites Planetenrad 7" umfassen. Erstes Planetenrad 7' und zweites Planetenrad 7" sind drehfest miteinander verbunden und weisen unterschiedliche wirksame Durchmesser auf. Das Planetenradpaar kann hierzu entweder einstückig oder mehrstückig mit drehfest zueinander angeordneten ersten Planetenrädern 7' und zweiten Planetenrädern 7" ausgebildet sein.

Wird die Außenradeinheit 4 bzw. das Außenrad 5 über die Getriebeantriebswelle 3 drehangetrieben, nimmt das Außenrad 5 Planetenradwellen 17 mit, auf der die Planetenradpaare drehbar gelagert sind. Das erste Planetenrad 7' kämmt mit einem Stützsonnenrad 9', das zweite Planetenrad 7" kämmt mit einem Abtriebssonnenrad 9". Erstes Planetenrad und zweites Planetenrad sowie Stützsonnenrad 9' und Abtriebssonnenrad 9" haben jeweils unterschiedlich wirksame Durchmesser.

Die Achsantriebseinheit 1 weist eine differentialgetriebelose, kupplungsgesteuerte Differentialeinheit 14 ohne formschlüssig wirkendes Differentialgetriebe, sondern mit zwei individuell ansteuerbare Differentialkupplungen 18 auf, über die die elektromotorische Antriebsleistung zu den Antriebsrädern weitergeleitet wird. Selbstverständlich kann anstelle einer derartigen Differentialeinheit auch ein klassisches Differentialgetriebe eingesetzt werden. Wie sich aus Figur 1 und Figur 2 ergibt, ist die Getriebeantriebswelle 3 als Hohlwelle ausgeführt und deren Rotationsachse fällt mit der Rotationsachse der Radwellen sowie der des Elektromotors EM zusammen.

Radial in das Außenrad 5 integriert ist eine Doppel-Planeteneinheit 6 mit einer Mehrzahl von jeweils ein erstes Planetenrad 7' und ein zweites Planetenrad 7" umfassenden Planetenradpaaren, die wiederum mit einem ebenfalls axial in die Planeteneinheit 6 integrierten Sonnenradeinheit 8 kämmen, die ein Stützsonnenrad 9' und ein Antriebssonnenrad 9" aufweisen.

Seitlich neben der Planeteneinheit 6 ist eine hydraulisch betätigbare Kupplung 10 angeordnet, mit der das Abtriebssonnenrad 9" und die Außenradeinheit 4 gegeneinander durch Schließen der Kupplung 10 verblockt werden können, so dass das die Außenradeinheit 4, die Planeteneinheit 6 und die Sonneneinheit 8 umfassende Zweiganggetriebe 2 zur Realisierung eines Direktantriebs (i=1, bevorzugt 2. Gang) als Block rotiert. Hierbei dreht sich auch das Stützsonnenrad 9' gegenüber dem Achsantriebsgehäuse 16 in einer Freilaufdrehrichtung, die ein Freilauf 11, der bei dem gezeigten Ausführungsbeispiel außenseitig am Achsantriebsgehäuse 16 drehfest angeordnet ist, zulässt, sofern eine Blockiereinrichtung 19 sich in einer Freigabestellung befindet, in der der Freilauf ein Rotieren des Stützsonnenrads 9' in Freilaufdrehrichtung zulässt. Um ein Zusammenwirken von Stützsonnenrad 9' und Freilauf 11 zu ermöglichen, ist eine mit dem Stützsonnenrad 9' drehfest verbundene Innenwelle innerhalb der als Hohlwelle ausgebildeten Getriebeabtriebswelle 13 nach außen geführt, um dort mit der von außen am Achsantriebsgehäuse 16 angeordneten und damit von außen gut zugänglichen Sperreinrichtung (Freilauf 11) zusammenzuwirken.

Zur Realisierung des gewünschten Übersetzungsverhältnisses i>1 (bevorzugt 1. Gang) ist der wirksame Durchmesser von erstem Planetenrad 7' größer als der wirksame Durchmesser des zweiten Planetenrads 7" und dem entsprechend der wirksame Durchmesser des Stützsonnenrades 9' kleiner als der wirksame Durchmesser des Abtriebssonnenrads 9".

Ist die Kupplung 10 geöffnet, stützt sich das nun infolge einer Drehrichtungsumkehr in Sperrdrehrichtung beanspruchte Stützsonnenrad 9' über den Freilauf 11 gegen das Achsantriebsgehäuse 16 ab. Das erste Planetenrad 7' rollt auf dem stehenden Stützsonnenrad 9' ab, während es um die Planetenradwelle 17 rotiert und dabei das zweite Planetenrad 7" unmittelbar antreibt, welches wiederum über die zwischen dem zweiten Planetenrad 7" und dem Abtriebssonnenrad 9" wirkende Verzahnung das Abtriebssonnenrad 9" und damit die hiermit drehfest verbundene Getriebeabtriebswelle 13 antreibt. Abtriebssonnenrad 9" und Getriebeabtriebswelle 13 können, sofern sie wie in Figur 1 dargestellt einstückig ausgebildet sind, gemeinsam das Getriebeausgangsglied bilden. Selbstverständlich können die Getriebeabtriebswelle 13 und das Abtriebssonnenrad 9" auch mehrteilig ausgeführt sein, indem Abtriebssonnenrad 9" als von der Getriebeabtriebswelle 13 separates Bauteil drehfest mit dieser verbunden ist.

Es sei angemerkt, dass das mit dem Stützsonnenrad 9' kämmende erste Planetenrad 7' kann - wie in Figur 1 gezeigt - grundsätzlich sowohl auf der der Kupplung 10 abgewandten bzw. der in Figur 1 rechten Seite des Planetenradpaares angeordnet sein kann als auch auf der der Kupplung 10 zugewandten bzw. der in Figur 1 linken Seite des Planetenradpaares angeordnet sein kann. Entgegen der in Figur 1 und Figur 2 gezeigten Ausführung ist dann die Getriebeabtriebswelle 13 als Innenwelle auszubilden, während die mit einer Sperreinrichtung (Freilauf 11) zusammenwirkende und mit dem Stützsonnenrad 9' drehfest verbundene Welle als eine die Innenwelle umschließende Hohlwelle auszubilden ist.

Die in Figur 1 und Figur 2 gezeigte Ausführung ist allerdings zu bevorzugen, weil hierbei die Kupplung 10 die als Getriebeeingangsglied fungierende Funktionseinheit (Außenradeinheit 4 und die hiermit eine Einheit bildende Planeteneinheit 6) direkt mit der Getriebeabtriebswelle 13 verblockt, so dass die weiteren, dazwischen liegenden Bauteile (Planetenradpaar, Stützsonnenrad, Lager, etc.) wirksam überbrückt und somit weitgehend aus der Antriebskette herausgenommen sind und beim Betrieb des Fahrzeugs im Direktantrieb keiner nennenswerten Beanspruchung unterliegen.

Vorteilhaft an der aus den Figuren 1 und 2 ersichtlichen Ausgestaltung ist ferner, dass die Kupplungslamellen der Kupplung 10 um das zweite Planetenrad 7" herum angeordnet sein können, das mit seiner äußeren Mantelfläche einen kleineren Durchmesser überstreicht als das erste Planetenrad 7". Hierdurch kann die Kupplung 10 trotz der Tatsache, dass diese zumindest einen Teil der Planetenradpaare radial außenseitig umgibt, einen kleineren Durchmesser aufweisen als bei einer Ausführungsform, bei der die Kupplung 10 um das erste Planetenrad 7' herum angeordnet ist.

Es sei angemerkt, dass abweichend von der in Figur 1 dargestellten Ausführungsform mit lediglich außenverzahntem Außenrad, Doppel-Planeteneinheit und Doppel-Sonneneinheit selbstverständlich auch eine Ausführung denkbar ist, bei der ein klassisches Planetengetriebe zum Einsatz kommt, dass als Außenradeinheit ein innenverzahntes Hohlrad, eine einfache Planeteneinheit (Planeteneinheit ohne Planetenradpaare, die zwei Planetenräder unterschiedlich wirksamen Durchmessers aufweisen) und einer einfachen Sonneneinheit (Sonneneinheit mit nur einem Sonnenrad) zum Einsatz kommen kann, wie unter anderem in den Unterlagen der internationalen Patentanmeldung PCT/EP2016/079169 beschrieben ist.

Aus Figur 2 ist ersichtlich, dass sowohl die Kupplungsbetätigung 20 als auch die Blockierbetätigung 22 der Blockiereinrichtung über denselben hydraulischen Leitungsstrang mit Hydraulikdruck in stets gleicher Höhe angesteuert werden. Die Blockierbetätigung 22 und die Kupplungsbetätigung 20 weisen beide durch Federn gebildete Vorspannmittel 23 auf, die gleichzeitig auch als Rückstellmittel fungieren. Durch die Dimensionierung der Vorspannmittel 23 ist sichergestellt, dass bei dem in Figur 2 gezeigten Schaltsystem die Blockiereinrichtung 19 bereits bei einer Druckschaltschwelle in die Blockierstellung übergegangen ist, bevor die Reibkupplung 10 zu schließen beginnt und dort auch sicher bleibt, solange der Schaltsystemdruck oberhalb der Kupplungsschaltschwelle liegt. Durch diese Abstimmung der Blockierschaltschwelle und der Kupplungsschaltschwelle mit rein mechanischen Maßnahmen ist dem System die gewünschte Schaltsequenz für das in Figur 2 gezeigte Schaltsystem, das ein im ersten Gang ausfallsicheres System ist, mechanisch inhärent. Diese Ausgestaltung ermöglicht nicht nur eine einfache Steuerung, sondern auch, dass Blockierbetätigung und Kupplungsbetätigung beide über nur eine Pumpe oder nur ein Ventil hydraulisch angesteuert werden können und dass beide Betätigungen bei Unterschreiten der jeweiligen Schaltschwelle selbsttätig und in der gewünschten Schaltabfolge in die ausfallsichere Position zurückkehren. Weder beim Hochschalten noch beim Herunterschalten ist ein aufwendig zu steuerndes "Hand-Over", wie es zum Beispiel Doppelkupplungsgetriebe erfordern, vonnöten.

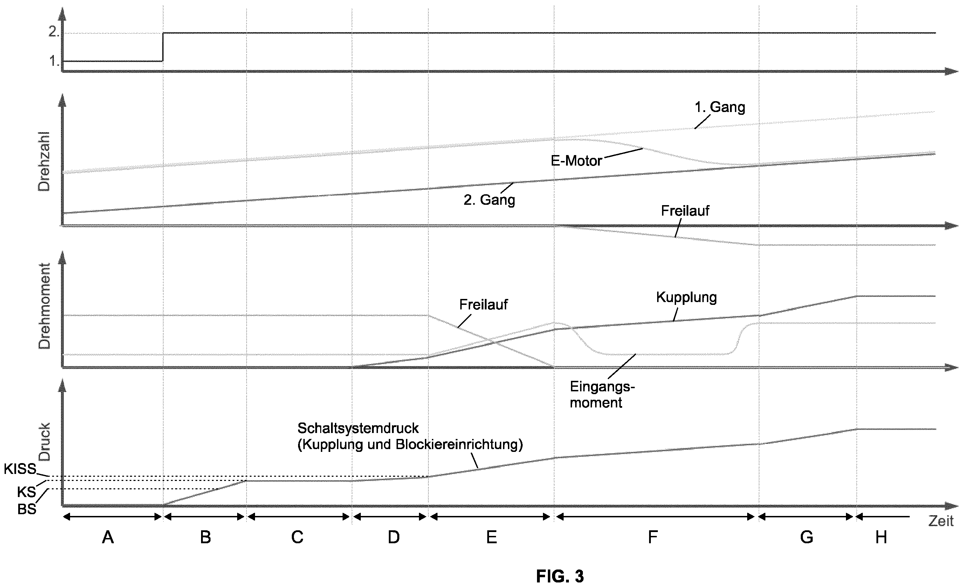

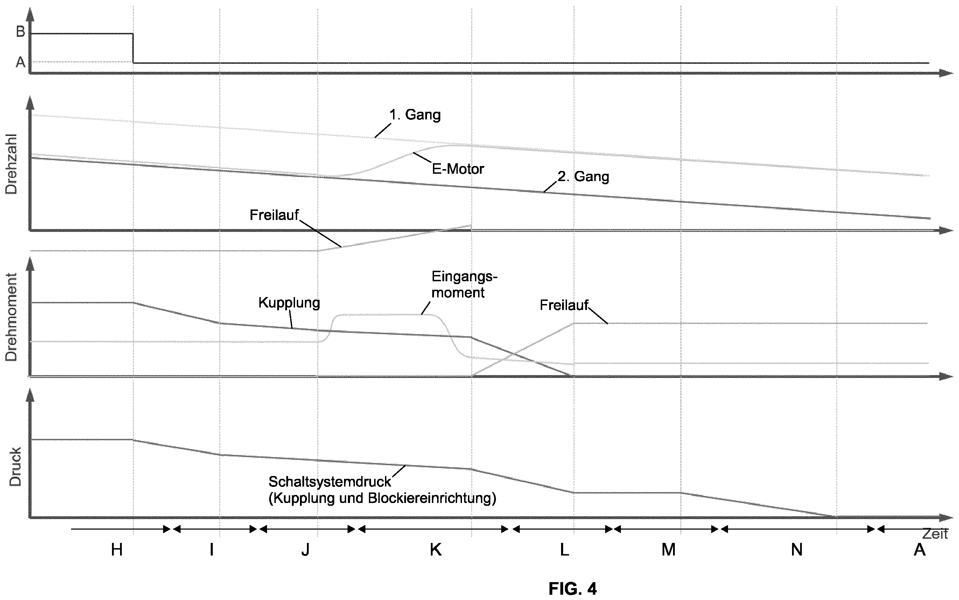

Figur 3 und Figur 4 zeigen anhand von Kurvenverläufen den sequentiellen Ablauf eines Schaltvorgangs in 7 einzelnen Abschnitten A bis H (Hochschalten) bzw. abschnitten H bis N (Herunterschalten) unter Darstellung von Drehzahlen, Drehmoment und hydraulischem Druck im Schaltsystem. Hierbei stellt Figur 3 die Abläufe beim Hochschalten vom ersten in den zweiten Gang und Figur 4 die Abläufe beim Herunterschalten vom zweiten in den ersten Gang in sequentieller Abfolge über der Zeitachse dar. Die Breiten der einzelnen Abschnitte A bis G sind nicht zeitproportional dargestellt. Die Kurvenverläufe dienen der zeichnerisch veranschaulichenden Illustration der Schaltvorgänge und sind nicht quantitativ und absolut, sondern lediglich als dem tatsächlichen Verlauf qualitativ grob angenähert zu interpretieren. Die nachfolgend erläuterten einzelnen Abschnitte gehen in der Realität fließend ineinander über.

Der Hochschaltvorgang unter Last stellt sich danach wie folgt dar:
In Abschnitt A ist der erste Gang eingelegt. Die Drehzahl des E-Motors folgt der Drehzahl, die der erste Gang bei der vorliegenden Fahrzeuggeschwindigkeit und Fahrzeugbeschleunigung vorgibt (Gerade "1- Gang"). Anhand der ansteigenden Drehzahl des E-Motors ist erkennbar, dass das Fahrzeug beschleunigt. Der hydraulische Systemdruck ist Null. Am Freilauf liegt ein konstantes Drehmoment an, da dieser das in Sperrrichtung drängende Stützsonnenrad abstützt. Das in das Getriebe eingeleitete und vom E-Motor bereitgestellte Getriebe-Eingangsmoment ist konstant. Am Ende des Abschnitts A erfolgt eine Schaltanforderung zum Gangwechsel vom ersten in den zweiten Gang.

Abschnitte B und C zeigen eine Vorkonditionierung des Schaltsystem in Vorbereitung auf den angestrebten Gangwechsel. Infolge der Schaltanforderung steigt in Abschnitt B (Entriegelungsabschnitt) der hydraulische Schaltsystemdruck unter Überschreiten der Blockierschaltschwelle. Die Blockiereinrichtung wird folglich in eine Freigabeposition überführt und am Ende von Abschnitt B ist der Freilauf entriegelt. Dem Abschnitt B schließt sich ein Abschnitt C (Überbrückungsabschnitt) an, in dem für einen kurzen Zeitabschnitt der Schaltsystemdruck konstant oberhalb der Blockierschaltschwelle BS und bevorzugt im Bereich der Kupplungsschaltschwelle KS gehalten wird, so dass der Freilauf nun als sicher entriegelt bzw. freigegeben gelten kann. Abschnitt C kann zeitlich sehr kurz gehalten werden oder gar entfallen. Am Ende der Abschnitte B und C ist das System für den Schaltvorgang vorkonditioniert.

In Abschnitt D (Kiss-Point Abschnitt) wird unter Überschreiten der Kupplungsschaltschwelle KS der Kiss-Point der Kupplung angefahren. Während dieser Phase steigt das Kupplungsmoment geringfügig an, weil die Kupplungsanordnung schon vor Erreichen des eigentlichen Kiss-Points aufgrund zunehmender Systemreibung und von Effekten zwischen den sich annähernden Kupplungslamellen geringfügig Drehmoment überträgt, bevor der eigentliche Kiss-Point erreicht ist.

In Abschnitt E (Momentabschnitt) wird die Last bzw. das Drehmoment, wie die fallende Drehmomentkurve für den Freilauf und die steigende Drehmomentkurve für die Kupplung zeigt, zunehmend vom Freilauf auf die Kupplung verlagert. Der Freilauf wird zunehmend entlastet, während gleichzeitig die Kupplung infolge des zunehmenden Schaltsystemdrucks zunehmend belastet wird und einen zunehmenden Anteil der zu übertragenden Leistung übernimmt. Um einen weichen Lastübergang, insbesondere kein für den Fahrer spürbares Nachlassen des Vortriebs aufkommen zu lassen, wird das Eingangsmoment am Getriebeeingangsglied durch den Elektromotor in Abstimmung auf das zunehmend von der Kupplung übertragende Kupplungsmoment angehoben bzw. überhöht. Die in der Reibkupplung aufgrund der in diesem Abschnitt E durchzuführenden Drehzahlangleichung der beiden Kupplungsseiten entstehende Verlustleistung wird auf diese Weise wirksam ausgeglichen, so dass die an den Antriebsrädern ankommende Antriebsleistung möglichst konstant bleibt und der Fahrer keine Zugkraftunterbrechung spürt. Am Ende von Abschnitt E ist der Freilauf vollständig entlastet. Das mit dem Freilauf zusammenwirkende Getriebeglied, in den Figuren 1 und 2 das Stützsonnenrad 9', steht (gerade noch) still und will (gerade) beginnen, in die Freilaufrichtung zu rotieren, was durch die zuvor erfolgte Überführung der Blockiereinrichtung in die Freigabestellung, die allerspätestens jetzt abgeschlossen sein muss, ungehindert möglich ist. Nach wie vor ist das effektive Übersetzungsverhältnis zwischen Getriebeeingangsseite und Getriebeausgangsseite aber im Wesentlichen das des ersten Ganges. Das Übersetzungsverhältnis wird allerdings durch die zwischen den beiden Kupplungsseiten herrschende Differenzdrehzahl abgebildet.

Erst jetzt folgt der eigentliche Schaltvorgang in Abschnitt F (Drehzahlangleichung E-Motor), bei dem die Drehzahl des E-Motors der vom zweiten Gang vorgegebenen Drehzahl angeglichen wird. Aus dem die Drehzahl betreffenden Diagramm ist ersichtlich, dass sich erst jetzt die E-Motordrehzahl der vom zweiten Gang bei der vorliegenden Geschwindigkeit vorgegebenen Drehzahl annähert. In dieser Phase reduziert sich die die Motordrehzahl, das Motormoment hingegen wird heruntergeregelt, weil die infolge der Massenträgheiten im System befindlichen Energien, insbesondere die im E-Motor befindlichen kinetischen Energien, zunächst abgebaut werden müssen. Der Schaltsytemdruck steigt in dieser Phase weiter an, um die Kupplung weiter zu schließen und das über die Kupplung übertragene Drehmoment weiter zu erhöhen und die Differenzdrehzahlen zwischen Kupplungseingangsseite und Kupplungsausgangsseite auf null zu reduzieren. Das Stützsonnenrad beginnt, den Freilauf in Freilaufdrehrichtung zu drehen, was durch die ins Negative fallende Drehzahlkurve des Freilaufs verdeutlicht wird.

Hat der E-Motor beim Übergang von Abschnitt F zu Abschnitt G die vom 2. Gang bei der vorliegenden Geschwindigkeit vorgegebene Drehzahl erreicht, wird das Drehmoment auf das Niveau, dass bei der vorgegebenen Geschwindigkeit für das gefühlte Gleichförmig-Halten der Vortriebsleistung erforderlich ist, angehoben und der durch den vollzogenen Drehzahlabfall auftretende Antriebsleistungsverlust ausgeglichen. Die bereits zu Beginn des Abschnitts G (Kupplungsschließabschnitt) in der Schließstellung befindliche und die gesamte Antriebsleistung schlupffrei übertragende Reibkupplung wird durch einen weiter bis zum maximalen Druckniveau ansteigenden Schaltsystemdruck fester geschlossen. Nach Abschnitt G ist der Hochschaltvorgang abgeschlossen.

Bei Herunterschalten (Figur 4) erfolgt zunächst am Ende des Abschnitts H eine entsprechend Schaltanforderung. In Abschnitt I (Anfahren des Haltemoments) wird der Schaltsystemdruck soweit gesenkt, bis das im aktuellen Fahrzustand gerade erforderliche Kraftschlusspotential der Kupplung vor einem Durchrutschen (Schlupfdruck) erreicht ist.

In Abschnitt J wird der Schaltsystemdruck mit geringerer Geschwindigkeit weiter abgesenkt bis das mit dem Freilauf zusammenwirkende Getriebeglied, das bis zum Ende von Abschnitt J mit konstanter (negativer) Drehzahl in Freilaufrichtung rotiert ist (Linienverlauf "Freilauf"), beginnt, zu Beginn von Abschnitt K (Drehzahlangleichung E-Motor) langsamer zu drehen, weil ein zunehmender Anteil der Antriebsleistung über die erste Gangstufe übertragen wird. Die Drehzahl des E-Motors wird zusammen mit dem Getriebeeingangsmoment angehoben, um den E-Motor von der vom Übersetzungsverhältnis des 2. Gangs vorgegebenen Drehzahl auf die vom Übersetzungsverhältnis des 1. Gangs vorgegebene Drehzahl anzuheben und gleichzeitig die in der Reibkupplung entstehende Verlustreibung auszugleichen, so dass der Fahrer möglichst keinen Schaltknick spürt.

Am Ende von Abschnitt K dreht der Freilauf kurz in die der Freilaufrichtung entgegengesetzte Richtung, bis die Sperrglieder im inneren des Freilaufs in lastübertragende Anlage geraten. Sodann fällt die Drehzahl des Freilaufs bzw. die des mit dem Freilauf (der Sperreinrichtung) zusammenwirkenden Getriebegliedes auf null.

Aus Abschnitt L (Drehmomentphase) ist ersichtlich, dass das vom Freilauf abgestützte Drehmoment in dem Maße, wie das Eingangsmoment zunehmend vom Freilauf abgestützt und die Kupplung entlastet wird, zunimmt. Das Eingangsmoment nimmt in dieser Phase in dem Maße ab, wie sich auch die über die Kupplung produzierte Verlustleistung reduziert. Am Ende des Abschnitts L und in Abschnitt M befindet sich das System im ersten Gang. Allerdings ist die Blockierschaltschwelle noch nicht unterschritten, so dass sich die Blockiereinrichtung in Abschnitt M noch in der Freigabestellung befindet. Erst durch weiteres Absenken des Schaltsystemdrucks in Abschnitt N geht die Blockiereinrichtung, getrieben durch die mechanischen Rückstellmittel, in die Blockierstellung über, so dass am Ende von Abschnitt N, wenn der Schaltsystemdruck vollständig heruntergefahren wurde, auch ein Rekuperationsbetrieb oder das Rückwärtsfahren möglich ist.

Aus dem letzten Figur 3 und Figur 4 dargestellten Kurvenverlauf ist ersichtlich, dass die Reibkupplung und die Blockiereinrichtung beide in jedem Schaltsystemzustand mit dem gleichen Schaltsystemdruck angesteuert sind.

### Bezugszeichenliste

- 1: Achsantriebseinheit
- 2: Zweiganggetriebe
- 3: Getriebeantriebswelle
- 4: Außenradeinheit
- 5: Außenrad
- 6: Planeteneinheit
- 7',7": Planetenräder
- 8: Sonneneinheit
- 9'/9": Stützsonnenrad/Abtriebssonnenrad
- 10: Kupplung
- 11: passiver Freilauf (Sperreinrichtung)
- 13: Getriebeabtriebswelle
- 14: Differentialeinheit
- 15: Differentialgehäuse
- 16: Achsantriebsgehäuse
- 17: Planetenradwelle
- 18: Differentialkupplungen
- 19: Blockiereinrichtung
- 20: Kupplungsbetätigung
- 22: Blockierbetätigung
- 23: Vorspannmittel/Rückstellmittel
- 24: Hydraulikpumpe
- 25: hydraulischer Leitungsstrang
- EM: Elektromotor

## Patentansprüche

1. Getriebeeinheit für ein Kraftfahrzeug mit einem Zweiganggetriebe (2), das eine Mehrzahl von Getriebegliedern zur Realisierung von zwei Übersetzungsstufen aufweist, und mit einem Schaltsystem zum Vollzug eines Gangwechsels, das Schaltsystem umfassend
- eine Reibkupplung (10), die über eine Kupplungsbetätigung (20) schaltbar ist und die in einer Schließstellung ein Getriebeglied drehfest hält oder mehrere Getriebeglieder drehfest zueinander verblockt, und die in einer Öffnungsstellung das eine Getriebeglied oder die mehreren Getriebeglieder freigibt, so dass das eine Getriebeglied drehen kann oder die mehreren Getriebeglieder relativ zueinander drehen können,
- eine Sperreinrichtung (11), die mit einem Getriebeglied zusammenwirkt und die dieses Getriebeglied in eine Sperrdrehrichtung blockiert und in eine Freilaufdrehrichtung drehen lässt, wobei das mit der Sperreinrichtung zusammenwirkende Getriebeglied in einer Übersetzungsstufe in Sperrdrehrichtung drängt und in der anderen Übersetzungsstufe in Freilaufdrehrichtung dreht,
- eine Blockiereinrichtung (19), die über eine Blockierbetätigung schaltbar ist und die ein Drehen des mit der Sperreinrichtung (11) zusammenwirkenden Getriebegliedes in die Freilaufdrehrichtung in einer Blockierstellung zu blockieren und in einer Freigabestellung zur Drehung in die Freilaufdrehrichtung freizugeben vermag,
**dadurch gekennzeichnet, dass**
das Schaltsystem eine Kupplungsschaltschwelle vorsieht, bei der die Reibkupplung (10) beginnt, aus der Öffnungsstellung in die Schließstellung überzugehen oder der Übergang aus der Schließstellung in die Öffnungsstellung vollzogen ist, und das Schaltsystem eine Blockierschaltschwelle vorsieht, bei der die Blockiereinrichtung aus der Blockierstellung in die Freigabestellung oder aus der Freigabestellung in die Blockierstellung übergeht, wobei die Blockierschaltschwelle derart auf die Kupplungsschaltschwelle abgestimmt ist, dass
- die Blockiereinrichtung in Freigabestellung ist, bevor das mit der Sperreinrichtung zusammenwirkende Getriebeglied beginnt, in die Freilaufrichtung zu drehen,
und/oder
- die Blockiereinrichtung erst dann in die Blockierstellung übergeht, wenn das mit der Sperreinrichtung zusammenwirkende Getriebeglied beginnt, in Sperrrichtung zu drängen;
wobei sowohl die Blockierbetätigung (22) als auch die Kupplungsbetätigung (20) mechanisch-passive Betätigungssysteme sind, die betriebszustandsunabhängig mit derselben Stellgröße in gleicher Höhe angesteuert sind,
wobei die Blockierbetätigung (22) ein jeweiliges Vorspannelement (23) aufweist, das derart dimensioniert ist, dass es bei ansteigender Stellgröße die gewünschte Blockierschaltschwelle mechanisch-passiv abbildet, und wobei die Kupplungsbetätigung (20) ein jeweiliges Vorspannelement (23) aufweist, das derart dimensioniert ist, dass es bei ansteigender Stellgröße die gewünschte Kupplungsschaltschwelle mechanisch-passiv abbildet.

2. Getriebeeinheit nach dem vorhergehenden Anspruch, **dadurch gekennzeichnet, dass** das Schaltsystem derart ausgebildet ist, dass es im ersten Gang ausfallsicher ist, oder derart ausgebildet ist, dass es im zweiten Gang ausfallsicher ist.

3. Getriebeeinheit nach einem der beiden vorhergehenden Ansprüche, **dadurch gekennzeichnet, dass** die Stellgröße hydraulischer Druck ist und zwischen der Blockierschaltschwelle und der Kupplungsschaltschwelle betragsmäßig eine Schaltschwellendifferenz von mindestens 0,5 bar liegt.

4. Getriebeeinheit nach einem der vorhergehenden Ansprüche, **dadurch gekennzeichnet, dass** die Stellgröße hydraulischer Druck ist und die hydraulische Ansteuerung der Blockierbetätigung (22) und der der Kupplungsbetätigung (20) über einen von einer einzigen Stellgrößeneinheit eingeregelten gemeinsamen Leitungsdruck erfolgt.

5. Getriebeeinheit nach einem der beiden vorhergehenden Ansprüche, **dadurch gekennzeichnet, dass** die Vorspannelemente (23) als Rückstellelemente dienen, die bei abnehmender Stellgröße die Blockiereinrichtung und die Reibkupplung zurück in eine ausfallsichere Stellung drängen.

6. Achsantriebseinheit für einen Antriebsstrang eines Kraftfahrzeugs mit einer Getriebeeinheit nach einem der vorhergehenden Ansprüche.

7. Achsantriebseinheit nach dem vorhergehenden Anspruch, **dadurch gekennzeichnet, dass** die Achsantriebseinheit (1) eine Differentialeinheit (14) zum Antrieb von Radwellen aufweist und das Zweiganggetriebe (2) und die Differentialeinheit (14) in einem gemeinsamen Achsantriebsgehäuse (16) angeordnet sind.

8. Verfahren zum Betrieb einer Getriebeeinheit nach einem der Ansprüche 1 bis 5 oder einer Achsantriebseinheit nach einem der Ansprüche 6 oder 7, **dadurch gekennzeichnet, dass** sowohl die Blockierbetätigung (22) als auch die Kupplungsbetätigung (20) betriebszustandsunabhängig mit derselben Stellgröße in gleicher Höhe angesteuert werden.

9. Verfahren nach dem vorhergehenden Anspruch, **dadurch gekennzeichnet, dass** der Schaltsystemdruck über eine einzige Stellgrößeneinheit, insbesondere über eine einzige elektronisch geregelte Hydraulikpumpe oder über ein einziges elektronisch geregeltes Steuerventil eingeregelt wird.

10. Verfahren nach dem vorhergehenden Anspruch, **dadurch gekennzeichnet, dass** das in die Getriebeeinheit eingeleitete Eingangsmoment während eines Gangwechsels vom ersten in den zweiten Gang angehoben wird, während die Sperreinrichtung (11) infolge zunehmender Momentübernahme durch die Kupplung (10) zunehmend entlastet wird.

11. Verfahren nach dem vorhergehenden Anspruch, **dadurch gekennzeichnet, dass** bei einem Gangwechsel vom zweiten in den ersten Gang die Elektromotor-Drehzahl auf die vom Übersetzungsverhältnis des ersten Gangs vorgegebene Drehzahl angehoben wird, bevor die Sperreinrichtung (11) beginnt, Drehmoment in Sperrdrehrichtung abzustützen.

## Claims

1. A transmission unit for a motor vehicle with a two-speed transmission (2), which has a plurality of transmission elements for the realization of two transmission ratios, and with a shifting system for carrying out a gear shift, the shifting system comprising
- a friction clutch (10) which can be shifted by means of a clutch actuation (20) and which holds a transmission element rotationally fixedly in a locking position or blocks several transmission elements rotationally fixedly with respect to each other, and which when in an open position releases the one transmission element or the several transmission elements so that the one transmission element can rotate or the several transmission elements can rotate relative to each other,
- a locking device (11) which interacts with a transmission element and which blocks this transmission element in a locking rotation direction and allows it to rotate in a freewheeling rotation direction, wherein the transmission element interacting with the locking device for one transmission ratio pushes in the locking direction and rotates in the freewheeling direction for the other transmission ratio,
- a blocking device (19), which can be shifted by means of a blocking actuation and which is able to block a rotation of the transmission element that interacts with the locking device (11) in the freewheeling direction when in a blocking position and releases the transmission element for rotation in the freewheeling direction when in a release position,
**characterized in that**
the shifting system provides a clutch shifting threshold at which the friction clutch (10) begins to transition from the open position to the closed position or the transition from the closed position to the open position is carried out, and the shifting system provides a blocking shifting threshold at which the blocking device changes from the blocking position to the release position or from the release position to the blocking position, wherein the blocking shifting threshold is coordinated with the clutch shifting threshold so that
- the blocking device is in the release position before the transmission element interacting with the locking device begins to turn in the freewheeling direction,
and/or
- the blocking device only changes to the blocking position when the transmission element interacting with the locking device begins to push in the blocking direction,
wherein both the clutch actuation (20) and the blocking actuation (22) are mechanical-passive actuation systems, that are controlled with the same control variable at the same level independently of the operating condition, wherein the blocking actuation (22) has a pre-tensioning element (23) that is dimensioned in such a way that it mechanically-passively represents the desired blocking shifting threshold in the case of an increasing control variable, and wherein the clutch actuation (20) has a pre-tensioning element (23) that is dimensioned in such a way that it mechanically-passively represents the desired clutch shifting threshold in the case of an increasing control variable.

2. The transmission unit as claimed in the preceding claim, **characterized in that** the shifting system is designed in such a way that it is fail-safe in the first gear or is designed in such a way that it is fail-safe in the second gear.

3. The transmission unit as claimed in any one of the two preceding claims, **characterized in that** the control variable is hydraulic pressure and there is a shifting threshold difference of at least 0.5 bar between the blocking shifting threshold and the clutch shifting threshold.

4. The transmission unit as claimed in any one of the two preceding claims, **characterized in that** the control variable is hydraulic pressure and the hydraulic control of the blocking actuation (22) and that of the clutch actuation (20) is carried out by means of a common line pressure controlled by a single control unit.

5. The transmission unit as claimed in any one of the two preceding claims, **characterized in that** the pre-tensioning elements (23) serve as resetting elements, which push the blocking device and the friction clutch back into a fail-safe position in the case of a decreasing control variable.

6. An axle drive unit for a powertrain of a motor vehicle with a transmission unit as claimed in any one of the preceding claims.

7. The axle drive unit as claimed in the preceding claim, **characterized in that** the axle drive unit (1) has a differential unit (14) for driving wheel shafts and the two-speed transmission (2) and the differential unit (14) are arranged in a common axle drive housing (16).

8. A method for operating a transmission unit as claimed in any one of claims 1 through 5 or an axle drive unit as claimed in any one of claims 6 or 7, **characterized in that** both the blocking actuation (22) and the clutch actuation (20) are controlled with the same control variable at the same level independently of the operating condition.

9. The method as claimed in the preceding claim, **characterized in that** the shifting system pressure is controlled by a single control unit, in particular by a single electronically controlled hydraulic pump or by a single electronically controlled control valve.

10. The method as claimed in the preceding claim, **characterized in that** the input torque introduced into the transmission unit is raised during a gear change from the first gear to the second gear, while the load on the locking device (11) is increasingly reduced due to increasing torque transfer by the clutch (10).

11. The method as claimed in the preceding claim, **characterized in that** during a gear change from the second gear to the first gear the electric motor revolution rate is raised to the revolution rate specified by the transmission ratio of the first gear before the locking device (11) begins to support torque in the blocking direction.

## Revendications

1. Unité de transmission pour un véhicule automobile avec une boîte de vitesses à deux rapports (2), qui présente une pluralité d'éléments de transmission pour réaliser deux étages de transmission, et avec un système de changement de vitesse pour effectuer un changement de vitesse, le système de changement de vitesse comprenant
- un embrayage à friction (10) qui peut être commuté par l'intermédiaire d'un actionnement d'embrayage (20) et qui, dans une position de fermeture, maintient un élément de transmission solidaire en rotation ou bloque plusieurs éléments de transmission solidaires en rotation les uns par rapport aux autres, et qui, dans une position d'ouverture, libère l'un des éléments de transmission ou les plusieurs éléments de transmission, de sorte que l'un des éléments de transmission peut tourner ou les plusieurs éléments de transmission peuvent tourner les uns par rapport aux autres,
- un dispositif de verrouillage (11) qui coopère avec un élément de transmission et qui bloque cet élément de transmission dans un sens de rotation de blocage et le fait tourner dans un sens de rotation de roue libre, l' élément de transmission qui coopère avec le dispositif de verrouillage étant poussé dans le sens de rotation de blocage dans un étage de transmission et tournant dans le sens de rotation de roue libre dans l'autre étage de transmission,
- un dispositif de blocage (19) qui peut être commuté par l'intermédiaire d'un actionnement de blocage et qui permet de bloquer dans une position de blocage une rotation de l' élément de transmission coopérant avec le dispositif de verrouillage (11) dans le sens de rotation de roue libre et de le libérer dans une position de libération pour une rotation dans le sens de rotation de roue libre,
**caractérisé en ce que**
le système de changement de vitesse prévoit un seuil de commutation d'embrayage auquel l'embrayage à friction (10) commence à passer de la position d'ouverture à la position de fermeture ou le passage de la position de fermeture à la position d'ouverture est effectué, et le système de changement de vitesse prévoit un seuil de commutation de blocage auquel le dispositif de blocage passe de la position de blocage à la position de libération ou de la position de libération à la position de blocage, le seuil de commutation de blocage étant accordé sur le seuil de commutation d'embrayage de telle sorte que
- le dispositif de blocage est en position de libération avant que l'élément de transmission coopérant avec le dispositif de verrouillage ne commence à tourner dans le sens de la roue libre,
et/ou
- le dispositif de blocage ne passe en position de blocage que lorsque l' élément de transmission coopérant avec le dispositif de verrouillage commence à être poussé dans la direction de blocage ;
où aussi bien l'actionnement de blocage (22) que l'actionnement d'embrayage (20) sont des systèmes d'actionnement mécaniques-passifs qui sont commandés avec la même grandeur de commande à la même hauteur, indépendamment de l'état de fonctionnement,
l'actionnement de blocage (22) présentant un élément de précontrainte respectif (23) qui est dimensionné de telle sorte qu'il reproduit mécaniquement et passivement le seuil de commutation de blocage souhaité lorsque la grandeur de commande augmente, et dans lequel
l'actionnement d'embrayage (20) présente un élément de précontrainte respectif (23) qui est dimensionné de telle sorte qu'il reproduit mécaniquement et passivement le seuil de commutation d'embrayage souhaité en cas de grandeur de commande croissante.

2. Unité de transmission selon la revendication précédente, **caractérisée en ce que** le système de changement de vitesse est conçu pour être à sécurité intégrée en première vitesse ou est conçu pour être à sécurité intégrée en deuxième vitesse.

3. Unité de transmission selon l'une des deux revendications précédentes, **caractérisée en ce que** la grandeur de commande est la pression hydraulique et **en ce qu'**il existe entre le seuil de commutation de blocage et le seuil de commutation d'embrayage une différence de seuil de commutation d'au moins 0,5 bar en valeur absolue.

4. Unité de transmission selon l'une des revendications précédentes, **caractérisée en ce que la** grandeur de commande est la pression hydraulique et que la commande hydraulique de l'actionnement de blocage (22) et de l'actionnement d'embrayage (20) s'effectue par l'intermédiaire d'une pression de conduite commune régulée par une seule unité de grandeur de commande.

5. Unité de transmission selon l'une des deux revendications précédentes, **caractérisée en ce que** les éléments de précontrainte (23) servent d'éléments de rappel qui, lorsque la grandeur de commande diminue, repoussent le dispositif de blocage et l'embrayage à friction dans une position de sécurité contre les défaillances.

6. Unité d'entraînement d'essieu pour une chaîne cinématique d'un véhicule automobile comprenant une unité de transmission selon l'une quelconque des revendications précédentes.

7. Unité d'entraînement d'essieu selon la revendication précédente, **caractérisée en ce que** l'unité d'entraînement d'essieu (1) présente une unité différentielle (14) pour l'entra nement d'arbres de roue et la boîte de vitesses à deux rapports (2) et l'unité différentielle (14) sont disposées dans un carter d'entraînement d'essieu commun (16).

8. Procédé de fonctionnement d'une unité de transmission selon l'une des revendications 1 à 5 ou d'une unité d'entraînement d'essieu selon l'une des revendications 6 ou 7, **caractérisé en ce qu'**aussi bien l'actionnement de blocage (22) que l'actionnement d'embrayage (20) sont commandés avec la même grandeur de commande, à la même hauteur, indépendamment de l'état de fonctionnement.

9. Procédé selon la revendication précédente, **caractérisé en ce que** la pression du système de changement de vitesse est réglée par une seule unité de grandeur de commande, en particulier par une seule pompe hydraulique à régulation électronique ou par une seule soupape de commande à régulation électronique.

10. Procédé selon la revendication précédente, **caractérisé en ce que** le couple d'entrée introduit dans l'unité de transmission est augmenté pendant un changement de vitesse de la première à la deuxième vitesse, tandis que le dispositif de verrouillage (11) est progressivement déchargé en raison d'une prise en charge croissante du couple par l'embrayage (10).

11. Procédé selon la revendication précédente, **caractérisé en ce que**, lors d'un changement de vitesse de la deuxième à la première vitesse, la vitesse de rotation du moteur électrique est augmentée jusqu'à la vitesse de rotation prédéterminée par le rapport de transmission de la première vitesse avant que le dispositif de verrouillage (11) commence à supporter un couple dans le sens de rotation de blocage.
